**Europäisches Patentamt**

**European Patent Office**

**Office européen des brevets**

(11) Publication number: **0 167 750**

**A2**

# (12) EUROPEAN PATENT APPLICATION

(21) Application number: **85105832.1**

(22) Date of filing: **13.05.85**

(51) Int. Cl.⁴: **G 01 J 3/42**

(30) Priority: **13.06.84 US 620356**

(43) Date of publication of application:
**15.01.86 Bulletin 86/3**

(84) Designated Contracting States:
**BE CH DE FR GB IT LI NL SE**

(71) Applicant: **ABBOTT LABORATORIES**
**14th Street and Sheridan Road North St**
**North Chicago Illinois 60064(US)**

(72) Inventor: **Lingenfelter, Keith Maynard**
**7605 Mullrany Drive**
**Dallas Texas 75248(US)**

(74) Representative: **Modiano, Guido et al,**
**MODIANO, JOSIF, PISANTY & STAUB Modiano &**
**Associati Via Meravigli, 16**
**I-20123 Milan(IT)**

(54) Spectrophotometer.

(57) An improved spectrometer for determining the presence and/or amount of a substance in a solution is disclosed. The improved spectrometer comprises means for correcting for interference caused by extraneous dark signals and stray light and means for separating and detecting the intensity of wavelength elements of the light spectrum, including means for attenuating the stray light portion of the wavelength spectrum prior to imaging of such stray light on a detector, which detector produces signals corresponding to the presence and/or amount of the substance in the solution.

FIG. 2

Croydon Printing Company Ltd

SPECTROPHOTOMETER

## Background of the Invention

### 1. Technical Field

This invention relates to apparatus and methods for analyzing fluids, and particularly relates to an improved spectrophotometer for determining the presence and/or amount of substances in test solutions such as blood serum or the like.

### 2. Background Art

Spectrophotometric instrument systems are well known which are designed for optically determining the presence and/or concentration of substances in solutions. Many such systems measure the absorbance of a solution at a known absorbing wavelength of light wherein the absorbance, A, can be calculated according to the following expression:

$$A = \log 10 \; 1/T$$

where T represents the amount of transmission of light through the solution. Since the light transmission properties of a solution depend upon the nature and amount of substances contained therein, the absorbance of a solution, and therefore the intensity of the wavelength elements of light passing through the solution, can be seen empirically to be a function and measurement of the presence or concentration of such substances.

Instrument systems of the type aforedescribed conventionally utilize a first probe for aspirating, e.g., a blood serum sample or other solution and depositing such test sample in a transparent laboratory vessel known as a cuvette located at a testing station. A second probe is then used to aspirate a reagent which is typically transported to the cuvette where it is contacted with the test sample previously deposited therein. In accordance with techniques well known in the art, a particular reagent will bind to a predetermined constituent substance of the test sample, thereby isolating that substance in the cuvette for subsequent optical analysis. If other substances in the sample require analysis, different reagents are ordinarily utilized.

After a particular constituent substance of the sample has been isolated by contacting the sample with a particular reagent, the substance may be optically analyzed by applying a beam of light to the cuvette in a well known manner. The isolated constituent substance of the sample in the cuvette causes this light beam to be diffracted int a plurality of discrete rays, each characterized by a different wavelength, which are transmitted through the sample at predeterminable paths relative thereto.

Conventional spectrophotometric instrumentation takes advantage of the fact that these discrete rays of light propagate from the sample at predetermined positional relationships, by locating light-responsive circuit elements at focusing positions along various ones of these predetermined paths. These circuit elements typically produce an electrical signal, such as a current, which is proportional to the intensity of the light impinging thereon. Thus, if one such circuit element is positioned to be impinged upon by a light ray characterized by a first wavelength, it will produce a relatively strong electrical signal if the relative intensity of that ray is strong. On the other hand, if an adjacent circuit element is positioned to be impinged upon by a different light ray characterized by a second wavelength, it will produce a relatively weak electrical signal if the relative intensity of that ray is weak.

The current signals produced by such circuit elements are then electrically manipulated in a well known manner to generate a signal corresponding to the absorbance of the light applied to the particular constituent substance isolated in the cuvette. This signal is indicative of that substance, for example, its presence and/or concentration. Moreover, this signal can be further manipulated by other electronic circuitry under the control, e.g., of a microprocessor, to provide a digital output that can be visually displayed in human-readable form.

Two means for selecting a given wavelength portions of the spectrum of light for passage through a test sample in the aforedescribed spectrophotometric determinations have typically been employed: optical interference filters and gratings. Optical interference filters are usually mechanically indexed in and out of the beam of light which is applied to the sample to select various portions of the spectrum, either manually or through the use of mechanization. However, such filters provide for separation of only discrete portions of the spectrum for which filters are commercially available. Grating-based systems offer the advantage of the availability of a complete spectrum, obtained by turning or moving mechanically the grating (termed "scanning") to obtain a desired wavelength. Such mechanized scanning is slow, however, generally requiring a time period ranging from a number of seconds to minutes to complete a full scan of the available spectrum.

Neither of the aforedescribed mechanical systems incorporate an array of light responsive circuit elements as a detector or a stationary grating for wavelength detection and discrimination. Such features, used in so-called "electronic scanning systems", have the advantage of extremely rapid spectrum scanning by comparison with the aforedescribed mechanical systems. However, the performance of such electronic systems, in terms of linearity and dynamic range, can suffer due to the presence of interfering stray light. The stray light problem occurs because continuous or white light ordinarily must enter the housing typically used for containing the detector and associated optical components of conventional spectrophotometric systems, there ultimately to be separated by a grating and read by a detector. This white light tends to scatter in the housing due to the entrance aperture, the grating and other reflective effects of the structure of the housing, causing undesired and deleterious interference with the light impinging upon the detector which ideally should correlate with the actual light absorbed by a test sample under analysis. In order to minimize such interference effects, conventional optical filters or mechanized grating-based systems have provided means for enabling only one wavelength at a time to pass through a test sample; thus, undesired light is rejected by the instrument. It is apparent, however, that the latter means for solving the interference problem is not satisfactory in electronic instrumentation designed to process large numbers of test samples in relatively short time periods, since passage of one wavelength at a time through a sample inherently limits the speed by which numerous samples can be analyzed, especially when it is desirable to use multiple wavelengths.

In view of the previously described disadvantages of conventional spectrophotometric instrument systems, it would be greatly advantageous to make available to the analytical laboratory an improved electronic scanning spectrophotometric instrument system having dynamic range and interference rejection characteristics at least equivalent to the earlier slow scanning systems, plus all of the advantages of electronic scanning systems, i.e., one which is available for reading a test result from a sample solution in less than several thousandths of a second, and capable of scanning of the entire useful spectrum of light in a fraction of a second, providing high throughput of tests in short time intervals.

## Summary of the Invention

In accordance with the present invention, the advantages mentioned in the previous paragraph have been achieved, relatively simply and economically, in an spectrophotometer which is improved over the aforedescribed instruments known in the art for determining the presence and/or amount of a substance in a solution. Such a spectrophotometer which is improved by the invention can comprise:

a light source;

means for directing a portion of the light from said source through the solution; and

means for separating light passing through the solution into wavelength elements of the light spectrum and detecting the intensity of said elements as a measurement of the presence and/or amount of the substance in the solution.

The improvement in a spectrophotometer provided by the invention can comprise, in combination;

means for correcting for interference caused by extraneous dark signals and stray light, whereby errors in the detection of the wavelength elements as a function of the presence and/or concentration of the substance are minimized, and wherein the means for separating and detecting comprises:

(a) a housing;

(b) a light entrance aperture in said housing;

(c) means for imaging the light passing through the aperture and into the housing onto a detector;

(d) means for attenuating the stray light portion of the wavelength spectrum of the light passing through the aperture which results from both the imaging means and said entrance aperture;

(e) means for separating the unattenuated portion of the light spectrum from the attenuated portion; and

(f) a detector for receiving the unattenuated portion of the light spectrum and providing output signals corresponding to the presence and/or amount of the substance in the solution.

## Brief Description of the Drawings

FIGURE 1 is a schematic diagram of an improved spectrophotometer in accordance with the present invention.

FIGURE 2 is a top plan view of detector means which forms part of the spectrophotometer shown in FIGURE 1, partially broken away to show details of construction thereof.

FIGURE 3 is an end elevational view of the detector means shown in FIGURE 2.

FIGURE 4 is a side elevational view, partially broken away to show details of construction, of the detector means shown in FIGURES 2 and 3.

## Detailed Description of the Invention

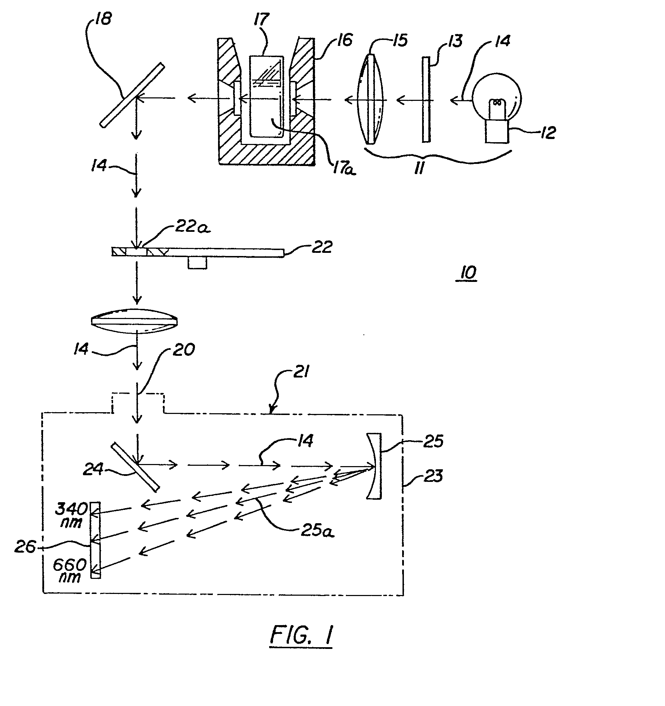

Referring to FIGURE 1 of the drawings, a preferred embodiment of the improved spectrophotometer of the invention is shown diagrammatically at 10. The spectrophotometer 10 comprises a lamp assembly 11 which includes a conventional tungsten halogen lamp source 12 and a coated heat absorbing glass 13 of a conventional type mounted in the path (indicated at 14) of the beam of light emanating from the source 12. The heat absorbing glass 13 functions to block passage therethrough of undesired portions (wavelengths) of the radiant energy spectrum emanating from the source 12. In this embodiment, all portions of the light spectrum in the range outside of from about 680 nm to 330 nm are blocked from passage by the heat absorbing glass 13.

The lamp assembly 11 further comprises a collecting lens 15 mounted in the light path 14. The lens 15 is of conventional design for spectrophotometric instrumentation, being made, in this embodiment, of optical grade synthetic fused silica having a transmission of at least about 90% of light at 330 nm through 700 nm. The lens 15 functions to gather non-blocked portions of the light spectrum from the source 12 which are passed through the heat absorbing glass 13, and to image those portions into largely conventional optical components 16 of the spectrophotometer 10. The components 16 are substantially of a type and construction typically utilized in conventional, commercially-available spectrophotometers, and, in this preferred embodiment, are configured to pass radiant energy to and through into a test sample container 17, such as a conventional cuvette, which typically contains a sample solution 17a. When the spectrometer 10 is in operation, the sample solution 17a in the container 17 can thus be analyzed for the presence and/or amount of a substance (analyte) in the solution. The sample 17a can comprise, for example, an ionic solution containing substances such as potassium, sodium or lithium, or organic substances such as proteins, in a body fluid such as serum, blood or spinal fluid, for which qualitative or quantitative analysis is desired. The components 16 thus operate to pass the light from the lens 15 through the sample 17a, in a in a manner well known to those skilled in the art.

A mirror 18, of conventional optical-quality construction, is mounted axially of the components 16 in the light path 14, as the latter emerges from the components 16 after passage through the sample 17a. The mirror 17a is situated such that the light emerging from the components 16 is reflected therefrom at a substantially perpendicular angle, as shown, to the components 16, and is designed so that essentially all of the light in the light path 14 is reflected at that perpendicular angle.

With further reference to the light path 14 reflected from the mirror 18 (Fig. 1), a conventional relay lens 19 is situated in the light path 14 such that it images the reflected light from the mirror 18 onto an entrance aperture 20 in a polychromator assembly 21, the latter being described in more detail below. The lens 19 is of largely conventional aspheric construction and is fabricated, in this preferred embodiment, of optical-grade "Plexiglas", a commercially available material manufactured by Rohm and Haas Co., from which detailed material specifications are available. Such lenses as 19 are available from U.S. Precision Lens, and other manufacturers. In addition, a calibration device 22 is interposed in the light path 14 between the mirror 18 and lens 19. The device 22 functions, as explained in more detail below, to block pre-selected portions of the wavelength spectrum of the light reflected from the mirror 18, prior to its reaching the lens 19.

As shown in Fig. 1, the polychromator assembly 21 includes a component housing 23 preferably constructed of a metal such as black anodized aluminum alloy, or sheet steel having a non-reflective coating on its interior surface. The entrance aperture 20 is located in the housing 23 axially of the lens 19 to admit the light path 14 emerging therefrom into the housing 23. In this preferred embodiment, the aperture 20 has an entrance slit size of about 0.8 mm width by 4.0 mm height and an exit slit size of about 0.96 mm width by 4.0 mm height. A mirror 24, of conventional optical construction, is also situated within the housing 23 such that it reflects incident light from the path 14, after passage into the housing 23 by means of the aperture 20, as shown, at an angle of approximately 90° in the plane of the diagram of FIG. 1, and approximately 3.5° directly downwardly into the plane of the diagram of Fig. 1, and images the light path 14 onto a diffraction grating 25, also part of the polychromator 21. The grating 25, in this preferred embodiment, is of a type which has an initial wavelength of substantially 335 nm and a maximum wavelength of 665 nm, a dispersion of 8 nm/mm, a resolving power of about 8 nm or less and an f number of about 2.0. The grating 25 is also canted downwardly at about 3.5 angle with respect to the mirror 24, and thus has its entrance slit slightly above the light path 14 (the focal plane). The grating 25 has a nominal groove depth of about 1000 angstroms, and is commercially available from American Holographic, Acton, Mass., 01720 from which company detailed technical specifications can be obtained.

As shown in Fig. 1 by the multiple lines 25a, the function of the grating 25 is to separate the light spectrum reflected from the mirror 24 into its wavelength components; in this preferred embodiment, the grating 25 separates the spectrum into its components having wavelengths of from about 660 nm to 340 nm. The grating 25 also serves to reflect such wavelength components onto a detector 26 comprised of light-responsive circuit elements. The detector 26 is also part of the polychromator 21, and, in the preferred embodiment shown, includes a combination of a monolithic silicone diode array and wavelength sorting filter, as described in more detail, infra. As previously stated, the grating 25, in this preferred embodiment, is canted downwardly into the plane of the diagram FIG. 1, so that the total included angle between the entrance aperature 20 and the detector 26, with the center of the grating

25 at the apex, is substantially 7° in a plane vertical to the plane of the diagram (Fig. 1).

In accordance with this preferred embodiment of the invention, the purpose of the aforesaid downward cant angle of the grating 25 is to enable spurious and undesirable stray light reflections originating from the surface of the detector 26 to be attenuated by downwardly directing such reflections at an additional 7° angle into the plane of the diagram (Fig. 1). Accordingly, any such stray light reflections do not impinge upon the grating 25 and thus cannot re-image upon the detector 26. Such re-imaging, if allowed to occur, could cause deleteriously high levels of stray light to strike the detector 26 and could undesirably result in substantial errors in the light-responsive output of the detector 26. Accordingly, the foregoing optical configuration of the polychromator 21 is effective for both attenuating the aforementioned stray light and for separating such stray light from unattenuated, desired light in the path 14 so that the detector 26 does not receive such stray light.

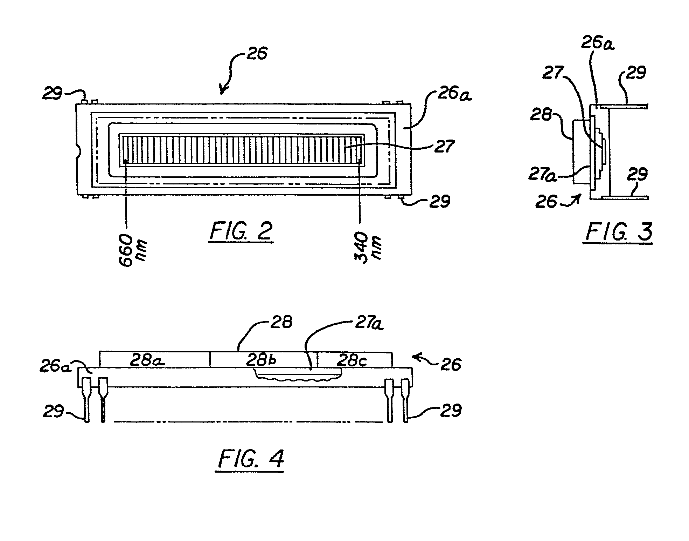

Referring now to Fig. 2 of the drawings, the detector 26, in this preferred embodiment, includes a monolithic silicone photodiode array, mounted in a conventional ceramic protective casing 26a, and having, in this particular case, 41 separate diode elements, as shown generally at 27 in Fig. 2. Each photodiode element is of a commercially available type which is sensitive to an 8 nm portion of the spectrum from 340 nm to 660 nm. Accordingly, each photodiode generates a current output signal which is responsive and proportional to the incident light inpinging thereupon, which output signal is conducted by conventional wire connectors 29 to conventional electronics, such as microprocessor-controlled circuitry, capable of converting such signals to human or machine readable information, representing the output of each diode element as it corresponds to the presence and/or amount of a substance in a test sample under analysis.

In addition, the detector 26 comprises a wavelength sorting filter 28 (Figs. 3 and 4) composed of conventional filter glass elements 28a, 28b and 28c (Fig. 4) arranged in a horizontal pattern and bonded with a conventional optically clear adhesive to an optical glass window 27a which is disposed over the surface of the photodiode array 27, such that the elements of the filter 28 are interposed between the incident light from the grating 25 (Fig. 1) impinging on the detector 26 and the array 27. Therefore, the filter 28, which can be composed, as in this preferred embodiment, of three separate filter glass elements bonded together in a conventional manner only passes predetermined, desired wavelengths of light to particular ones of the photodiode elements of the array 27 which have been preselected to receive such wavelengths, and substantially blocks all other undesired wavelengths of light from impinging on such selected elements. It is to be appreciated that although the preferred embodiment of the detector 26 shown is constructed with the sorting filter 28 composed of three elements (in this embodiment, 28a is a GG10, 28b is a BG28 and 28c is a UG11, using commercial optical filter value designations) any number of similar filter elements having the same or different values could be used, depending on the desired preselected wavelength for each of the photodiode elements 27 in a particular application of a spectrophotometer constructed in accordance with the invention. Also, it is to be appreciated that the detector 26 can be constructed, as a matter of choice by those of ordinary skill in the art, to be capable of detecting all available wavelengths; in this preferred embodiment, only 16 of the 41 available wavelengths are preselected for detection by means of selection of the photodiode elements 27. For example, the number and type of such elements can be varied, or their position varied from that of particular ones of the elements of the array 27 as shown.

Referring again to Fig. 1 of the drawings, the calibration device 22 is now described in greater detail. The device 22 facilitates obtaining signal recordings, from the aforedescribed largely conventional optical components 16, which are at or near the condition of zero (no) light incidence on the detector 26. At conditions of near zero or zero light, errors, due to electronic biases or stray light optical biases from the components 16, can cause significant errors in the ultimate current output signal readings taken from the detector 26 which can be correlated, as previously described, electronically to the presence and/or amount of a substance in a sample solution under analysis. Such signal readings, when obtained during calibration of the instrument 10, are used to correct for these undesirable biases.

The calibration device 22, in its preferred embodiment, is of a construction largely conventional in the art and comprises a shutter (not shown) which blocks all light and a series of blocking filters (not shown) which block pre-selected portions of the light spectrum. An opening, shown at 22a, passes all of the light and a means (not shown) operable for indexing the blocking filters, shutter, and opening into the light path 14, also form a part of the device 22.

During normal operation of the spectrophotometer 10 for detecting the presence and/or amount of a substance in a test sample, the opening 22a, which passes all light, is placed in the light path 14.

This enables any portion of the light spectrum to be available to the aforedescribed polychromator 21.

However, during calibration of the spectrophotometer 10, a nonabsorbing medium (not shown) is placed in the light path 14, in the position where the test sample container 17 and sample 17a are normally placed (as shown in FIG. 1), and so-called "dark offset" or "dark bias" signal readings are taken with the shutter of the device 22 indexed into the path 14. Also, stray light readings are taken with a pre-selected blocking filter of the device 22 indexed into the path 14; such a filter blocks all light at the wavelength that a pre-selected one of the photodiodes of the array 27 (FIG. 2) is designed to detect, and passes light at otner wavelengths. Readings taken from the detector 26 under these conditions thus comprise both the aforementioned dark bias signals plus signals from any undesired light that is incident on the array 27. Accordingly, both stray light and the aforementioned dark bias or dark offset can be subtracted, using well-known mathematical manipulations performed manually or by conventional electronics, from any signal reading taken with an actual test sample in place of the aforementioned nonabsorbing medium, enabling correction of such actual signal reading for either condition, as desired.

It is to be appreciated that, in addition to the particular structure and materials shown and described herein of an especially preferred embodiment of the invention, many substitutes and alternatives therefor are available to one of ordinary skill in the art in constructing an improved spectrophotometer in accordance with the invention. Accordingly, it is apparent that this invention is in no way limited solely to the preferred embodiment treated in detail herein, and that various modifications of this invention as specifically set forth will be apparent to the routineer. It is, therefore, to be appreciated that all such modifications are within the spirit and scope of this invention, which is limited solely as defined in the following claims.

CLAIMS:

1.  In a spectrophotometer for determining the presence and/or amount of a substance in a solution, which spectrophotometer comprises:

a light source;

means for directing a portion of the light from said source through the solution; and

means for separating light passing through the solution into wavelength elements of the light spectrum and detecting the intensity of said elements as a measurement of the presence and/or amount of the substance in the solution; the improvement comprising in combination;

means for correcting for interference caused by extraneous dark signals and stray light, whereby errors in the detection of said wavelength elements as a function of the presence and/or concentration of the substance are minimized, and wherein the means for separating and detecting comprises:

(a) a housing;

(b) a light entrance aperture in said housing;

(c) means for imaging the light passing through said aperture and into the housing;

(d) means for attenuating the stray light portion of the wavelength spectrum of the light passing through said aperture which results from both said imaging means and said entrance aperture;

(e) means for separating the unattenuated portion of the light spectrum from the attenuated portion; and

(f) a detector for receiving the unattenuated portion of the light spectrum and providing output signals corresponding to the presence and/or amount of the substance in the solution.

2.    The improvement defined in claim 1,
wherein the detector comprises a monolithic photodiode
array.

3.    The improvement defined in claim 1,
wherein the means for correcting for interference caused
by extraneous dark signals and stray light comprises a
calibration device interposed between the means for
directing a portion of the light from said light source
through the solution and the means for separating and
detecting.

1/2

FIG. 1

2/2

FIG. 2

660 nm

340 nm

FIG. 3

FIG. 4